# FASCICULE DE BREVET EUROPEEN

(11) **EP 0 537 050 B1**
(45) Date de publication et mention de la délivrance du brevet: **06.12.1995**
(21) Numéro de dépôt: 92402663.6
(22) Date de dépôt: 29.09.1992
(51) Int. Cl.: F16H 61/20

(54) **Procédé et dispositif de commande automatique de la pression d'alimentation d'un récepteur hydraulique**
Verfahren und Vorrichtung zur automatischen Steuerung des Versorgungsdrucks eines hydraulischen Verbrauchers
Method and device for the automatic control of line pressure of a hydraulic actuator

(30) Priorité: 11.10.1991 FR 9112527
(43) Date de publication de la demande: 14.04.1993
(73) Titulaire: REGIE NATIONALE DES USINES RENAULT S.A., 92109 Boulogne Billancourt (FR)
(72) Inventeur: Leorat, François, F-78000 Versailles (FR)

(56) Documents cités:
- DE-A- 3 423 825
- US-A- 4 696 383
- PATENT ABSTRACTS OF JAPAN vol. 6, no. 80 (M-129)19 Mai 1982 & JP-A -57 018 851 (TOYOTA) 30 Janvier 1982
- PATENT ABSTRACTS OF JAPAN vol. 10, no. 114 (M-473)26 Avril 1986 & JP-A-60 241 558 (HONDA) 30 Novembre 1985

## Description

La présente invention se rapporte à un procédé et à un dispositif de commande automatique de la pression d'alimentation d'un récepteur hydraulique tel qu'un embrayage ou un frein de boîte de vitesses automatique de véhicule automobile. Plus précisément, elle vise à assurer une interruption automatique de la transmission du couple entre le moteur et les roues, lorsque le moteur est au ralenti, et le véhicule à l'arrêt.

Les transmissions automatiques conventionnelles, équipées de manière classique d'un coupleur ou d'un convertisseur de couple, sont conçues de telle sorte qu'un rapport de marche avant (ou de marche arrière) étant engagé, la transmission du couple moteur aux roues n'est jamais interrompue, même à l'arrêt du véhicule, tant que le sélecteur n'est pas placé en position Neutre ou Parking. Cette non-interruption du couple se traduit par un couple de traînée, qui communique au véhicule une tendance à "ramper".

Pour supprimer ce couple de traînée, ressenti très souvent comme un désagrément par le conducteur, on peut envisager plusieurs types de solutions. On connaît par exemple des dispositifs de conception simple, enclenchables à volonté par le conducteur, lorsqu'il souhaite débrayer la transmission à l'arrêt. Ces dispositifs assurent par ailleurs un embrayage progressif lors du redémarrage. Des solutions plus élaborées consistent à prévoir un débrayage automatique de la transmission lorsque les conditions de "débrayage à l'arrêt" (moteur tournant au ralenti et véhicule à l'arrêt) sont satisfaites.

La publication FR-A-2.543.242, de la demanderesse, décrit à ce sujet un système de "commande de la pression d'alimentation d'un récepteur hydraulique", assurant le débrayage de la transmission à l'arrêt. Ce système met en oeuvre une électrovanne modulante, de type normalement fermée au repos, branchée en dérivation sur le circuit hydraulique d'alimentation du récepteur d'entrée de la transmission automatique. L'électrovanne modulante mise en oeuvre dans ce dispositif permet de moduler la pression d'alimentation du récepteur. Elle est pilotée par le calculateur électronique qui contrôle la transmission automatique, de telle manière que la pression d'alimentation du récepteur hydraulique soit en permanence maintenue à une valeur qui permette d'assurer que les garnitures du récepteur sont constamment en position d'accostage, lors du débrayage à l'arrêt : pour ce faire, le glissement du convertisseur est asservi à une valeur de consigne prédéterminée en fonction des conditions de température d'huile de la transmission, et de vitesse du moteur. L'électrovanne de commande fait baisser la pression d'alimentation si le glissement réel est inférieur au glissement de consigne, la consigne de glissement correspondant précisément au faible couple souhaité, transmis par le récepteur hydraulique en position d'accostage.

Le système de commande décrit dans la publication FR-A-2.543.242 est performant, mais sa mise en oeuvre est relativement coûteuse, en raison du prix élevé de l'électrovanne modulante utilisée.

Par la publication US-A-4.696.383, on connaît un autre système de commande de débrayage à l'arrêt, comportant un tiroir d'alimentation du premier récepteur hydraulique de la transmission placé sous le contrôle d'un sélecteur recevant lui-même une pression de commande, dont la valeur dépend de l'état d'un distributeur répondant à la position de la pédale d' accélérateur.

La présente invention vise à réduire le coût des systèmes de commande de débrayage à l'arrêt connus, et à simplifier leur mise en oeuvre.

Elle propose un procédé de commande de la pression d'alimentation du récepteur d'entrée d'une transmission automatique comportant un convertisseur hydraulique qui reçoit le couple moteur et le transmet à un train épicycloïdal de changement de rapport actionné par un ensemble de récepteurs hydrauliques sous le contrôle d'un calculateur électronique, les consignes d'alimentation du récepteur d'entrée impliquant soit la transmission du couple moteur aux roues, soit l'interruption de cette transmission lorsque des conditions de débrayage à l'arrêt sont satisfaites. Ce procédé est caractérisé en ce que les consignes d'alimentation du récepteur d'entrée sont appliquées grâce au basculement de tiroirs de distribution hydrauliques à deux positions, contrôlant respectivement la mise à la bâche du récepteur d'entrée, et l'alimentation du convertisseur, de l'échangeur de chaleur et du système de graissage.

L'invention concerne également un dispositif de commande de la pression du récepteur d'entrée d'une transmission automatique. Ce dispositif est caractérisé en ce qu'il comporte une pompe hydraulique délivrant par l'intermédiaire d'un régulateur de pression principale une pression de ligne P1 dirigée d'une part vers le récepteur d'entrée sous le contrôle du premier tiroir de distribution hydraulique, et d'autre part vers le convertisseur, sous le contrôle du second distributeur hydraulique.

D'autres caractéristiques et avantages de l'invention apparaîtront clairement à la lecture de la description suivante d'un mode de réalisation particulier de celle-ci, en liaison avec le dessin annexé, dont la figure unique représente schématiquement le dispositif de commande de l'invention.

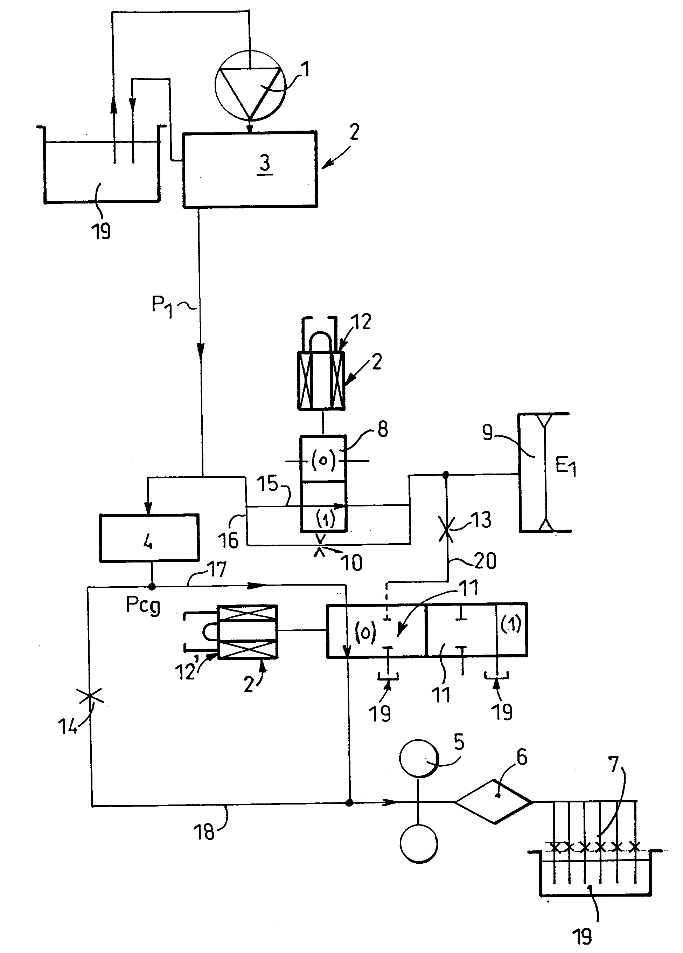

Sur la figure 1, on a représenté une pompe hydraulique 1 qui créée une pression d'huile, régulée en fonction des consignes du calculateur électronique 2 de la transmission automatique, par le régulateur de pression principal 3 qui délivre une pression principale ou pression de ligne P₁. Cette pression P₁ est dirigée, entre autres, vers un limiteur de pression 4 qui délivre lui-même une pression Pcg limitée à une valeur supérieure et destinée à l'alimentation du circuit de convertisseur de couple 5, d'échangeur de chaleur 6, et de graissage 7. La pression de ligne P₁ est par ailleurs dirigée vers le récepteur d'entrée 9 de la transmission automatique. Sur la figure 1, on voit que l'alimentation du récepteur d'entrée 9 peut s'effectuer, soit par un trajet principal 15 transmettant intégralement la pression de ligne P₁, et placé sous le contrôle du premier tiroir de distribution hydraulique 8, soit par une première dérivation 16 présentant une première restriction 10.

La pression Pcg issue du limiteur de pression est dirigée vers le convertisseur 5, l'échangeur de chaleur 6 et le circuit de graissage 7, selon deux trajets parallèles 17 et 18, le premier trajet 17 transmettant l'intégralité de la pression Pcg, sous le contrôle du second tiroir hydraulique 11, et le second trajet 18, ou seconde dérivation 18, présentant une seconde restriction 14. Enfin, le récepteur d'entrée 9 est relié à la bâche 19. Cette liaison 20 présente une troisième restriction 13, et est contrôlée par le second tiroir de distribution 11.

Tant que les conditions de débrayage à l'arrêt ne sont pas satisfaites, le premier tiroir de distribution 8 est en position (1) : le récepteur d'entrée 9 reçoit alors l'intégralité de la pression de ligne P₁. Par ailleurs, la première voie du second tiroir de distribution est en position (0) : sa première voie dirigeant l'intégralité de la pression Pcg vers le circuit de convertisseur 5, d'échangeur 6 et de graissage 7 est alors ouverte, tandis que la seconde voie du second tiroir 11 permettant de relier le récepteur d'entrée 9 à la bâche 19, est fermée (position (0) du second tiroir 11).

Lorsque les conditions de débrayage à l'arrêt sont satisfaites, le calculateur 2 commande, par l'intermédiaire des électrovannes tout ou rien 12, 12′, le basculement du premier et du second tiroir de distribution 8 et 11. Les conditions de débrayage à l'arrêt - véhicule à l'arrêt et moteur au ralenti - peuvent par exemple être telles que définies dans la publication FR-2.543.242, sans toutefois aucun caractère d'obligation. De même, la commande du basculement des tiroirs 8, 11 pourra éventuellement correspondre à celle décrite dans la publication EP-0.179.683. Les deux tiroirs de distribution 8, 11 sont donc basculés au moyen des deux électrovannes tout ou rien 12, 12′. Le basculement du premier tiroir 8 en position (0) a pour effet de couper l'alimentation directe en huile du récepteur d'entrée 9 de la transmission automatique : le fluide ne parvient plus à celui-ci qu'au travers de la première restriction 10. Par ailleurs, le basculement du second tiroir 11 en position (1) met le récepteur 9 en liaison avec la bâche 19, autorisant ainsi sa vidange partielle, contrôlée par la troisième restriction 13. La consigne d'alimentation hydraulique du récepteur d'entrée 9, correspondant à cette situation, est telle que la transmission du couple du moteur aux roues est interrompue : si le récepteur hydraulique d'entrée 9 est un embrayage ou un frein, ses garnitures sont avantageusement maintenues en position d'accostage.

Par ailleurs, le basculement du second tiroir de distribution 11 en position (1) a pour effet de couper la liaison directe 18 entre le limiteur de pression 4 et le circuit d'utilisation par le convertisseur 5, l'échangeur de chaleur 6 et le système de graissage 7. Dans cette situation, ces consommateurs ne sont plus alimentés qu'au travers de la seconde restriction 14. Par ailleurs, le récepteur d'entrée 9 est alimenté sous une pression inférieure à la pression de ligne P₁. Cette pression réduite est déterminée d'une part par le dimensionnement du potentiomètre hydraulique formé par les première et troisième restrictions 10 et 13, et d'autre part par la valeur de la pression de ligne P₁ fournie par le régulateur 3. Comme indiqué plus haut, lorsque le récepteur 9 est un embrayage ou un frein, ses garnitures sont maintenues en position d'accostage par cette pression réduite.

On comprendra aisément qu'en reconduisant un algorithme tel que celui décrit dans la publication FR-A-2.543.242, il est possible d'obtenir grâce à l'invention le résultat souhaité, à savoir un positionnement précis des garnitures d'embrayage ou de frein en position d'accostage, lors du débrayage à l'arrêt.

L'alimentation du circuit de convertisseur 5, d'échangeur de chaleur 6, et de graissage 7, à travers la seconde restriction 14, en cas de débrayage à l'arrêt, se justifie par le fait que le moteur tournant alors par hypothèse au ralenti, on peut craindre un débit insuffisant du régulateur de pression principale 8, qui ne permettrait pas de faire varier la pression P₂ sur une plage de valeurs d'une étendue suffisante. Par ailleurs, la quantité de chaleur à dissiper dans l'échangeur 6 étant très faible, du fait même de la situation de débrayage à l'arrêt, un débit limité au travers de l'échangeur 6 est suffisant pour refroidir la transmission.

On voit donc que la fonction remplie par le dispositif faisant l'objet de l'invention est identique à celle qui est décrite dans la publication FR-A-2.543.242, mais que la coûteuse électrovanne modulante a pu être remplacée par un ensemble d'électrovannes tout ou rien et de tiroirs de distribution hydrauliques qui sont des composants très bon marché.

## Revendications

1. Procédé de commande de la pression d'alimentation du récepteur d'entrée (9) d'une transmission automatique comportant un convertisseur hydraulique (5) qui reçoit le couple moteur et le transmet à un train épicycloïdal de changement de rapport actionné par un ensemble de récepteurs hydrauliques sous le contrôle d'un calculateur électronique (2), les consignes d'alimentation du récepteur d'entrée (9) impliquant soit la transmission du couple moteur aux roues, soit l'interruption de cette transmission lorsque des conditions de débrayage à l'arrêt sont satisfaites, caractérisé en ce que les consignes d'alimentation du récepteur d'entrée (9) sont appliquées grâce au basculement de tiroirs de distribution hydrauliques (8, 11) à deux positions, contrôlant respectivement la mise à la bâche (19) du récepteur d'entrée (9), et l'alimentation du convertisseur (5), de l'échangeur de chaleur (6) et du système de graissage (7).

2. Procédé de commande selon la revendication 1, caractérisé en ce que le récepteur hydraulique (9) est un embrayage ou un frein muni de garnitures, la consigne d'alimentation hydraulique qui implique l'interruption de la transmission du couple étant établie de façon à maintenir les garnitures en position d'accostage.

3. Dispositif de commande spécialement conçu pour la mise en oeuvre d'un procédé conforme aux revendications 1 ou 2, caractérisé en ce qu'il comporte une pompe hydraulique (1) délivrant par l'intermédiaire d'un régulateur de pression principale (3) une pression de ligne Pℓ dirigée d'une part vers le récepteur d'entrée (9) sous le contrôle du premier tiroir de distribution hydraulique (8), et d' autre part vers le convertisseur (5), sous le contrôle du second distributeur hydraulique (11).

4. Dispositif de commande selon la revendication 3, caractérisé en ce que le second distributeur hydraulique (11) contrôle également l'alimentation de l'échangeur de chaleur (6) et du système de graissage (7).

5. Dispositif de commande selon la revendication 4, caractérisé en ce que les tiroirs de distribution hydrauliques (8, 11) sont actionnés par des électrovannes de manoeuvre tout ou rien (12, 12′), placées sous le contrôle du calculateur (2).

6. Dispositif de commande selon les revendications 4 ou 5, caractérisé en ce que tant que les conditions de débrayage à l'arrêt ne sont pas satisfaites, le récepteur d'entrée (9) est alimenté simultanément par l'intermédiaire du premier tiroir de distribution (8) transmettant la pression de ligne P₁ issue du régulateur principal (3), et par l'intermédiaire d'une première dérivation (16) présentant une première restriction (10).

7. Dispositif de commande selon les revendications 4, 5 ou 6, caractérisé en ce que, tant que les conditions de débrayage à l'arrêt ne sont pas satisfaites, la liaison (20) du récepteur d'entrée (9) avec la bâche (19) est interrompue par le second tiroir de distribution (12), tandis que l'alimentation de convertisseur de couple (5), de l'échangeur de chaleur (6) et du système de graissage (7) est assurée simultanément par l'intermédiaire du second tiroir de distribution (12) transmettant intégralement la pression délivrée par le limitateur de pression (4), et par une seconde dérivation (18) présentant une seconde restriction (14).

8. Dispositif de commande selon l'une quelconque des revendications 4 à 7, caractérisé en ce que lorsque les conditions de débrayage à l'arrêt sont remplies, le premier et le second tiroir de distribution (8, 11) sont basculés de sorte que l'alimentation du récepteur d'entrée (9) s'effectue uniquement par l'intermédiaire de la première restriction (10), et que l'alimentation du convertisseur (5) de l'échangeur de chaleur (6) et du système de graissage (7) s'effectue uniquement par l'intermédiaire de la seconde dérivation (14), la liaison du récepteur avec la bâche étant également assurée.

9. Dispositif de commande selon les revendications 7 ou 8, caractérisé en ce que la liaison (20) du récepteur d'entrée (9) avec la bâche (19) présente une troisième restriction (13).

## Patentansprüche

1. Vorrichtung zur Steuerung des Versorgungsdrucks des Eingangsempfängers 9 eines automatischen Getriebes, das einen hydraulischen Wandler 5 aufweist, dem das Drehmoment des Motors zugeführt wird und der dieses einem Planetengetriebe für den Gangwechsel übermittelt, das durch eine Mehrzahl von hydraulischen Empfängern und durch Steuerung eines elektronischen Rechners 2 betätigbar ist, wobei die Einstellwerte für die Versorgung des Eingangsempfängers 9 die Übertragung des Drehmomentes des Motors an die Räder, bzw. die Unterbrechung dieser Übertragung bedingen, wenn während des Stillstands die Bedingungen des Auskuppelns erfüllt sind, dadurch gekennzeichnet, daß die Einstellwerte für die Versorgung des Eingangsempfängers 9 angelegt werden mittels der Umschaltung von hydraulischen Verteilungsschiebern 8, 11 zwischen zwei Stellungen, die eine Verbindung mit einem Sammelbehälter 19 für den Eingangsempfänger 9 bzw. die Versorgung des Wandlers 5, des Wärmetauschers 6 und des Schmiersystems 7 steuern.

2. Verfahren zur Steuerung nach Anspruch 1, dadurch gekennzeichnet, daß der hydraulische Empfänger 9 eine mit Wirkteilen versehene Kupplung oder Bremse ist, wobei der Einstellwert des hydraulischen Drucks, der eine Unterbrechung der Drehmomentübertragung bewirkt, derart eingestellt wird, daß er die Wirkteile in ihrer Wirkstellung hält.

3. Vorrichtung zur Steuerung, insbesondere zur Durchführung des Verfahrens gemäß den Ansprüchen 1 oder 2, dadurch gekennzeichnet, daß sie eine hydraulische Pumpe 1 aufweist, die mittels eines Hauptdruckreglers 3 einen Leitungsdruck P_{*l*} aufbaut, der einerseits dem Eingangsempfänger 9 mittels Steuerung durch den ersten hydraulischen Verteilungsschieber 8 und andererseits dem Wandler 5 mittels Steuerung durch den zweiten hydraulischen Wandler 11 zugeführt wird.

4. Vorrichtung zur Steuerung nach Anspruch 3, dadurch gekennzeichnet, daß der zweite hydraulische Verteiler 11 außerdem die Versorgung des Wärmetauschers 6 und des Schmiersystems 7 steuert.

5. Vorrichtung zur Steuerung nach Anspruch 4, dadurch gekennzeichnet, daß die hydraulischen Verteilungsschieber 8, 11 durch Auf- Zu- Elektroventile 12, 12′ betätigt werden, die vom Rechner 2 gesteuert werden.

6. Vorrichtung zur Steuerung nach Ansprüchen 4 oder 5, dadurch gekennzeichnet, daß solange die Bedingungen für das Auskuppeln bei Stillstand nicht erfüllt sind, der Eingangsempfänger 9 zugleich über den ersten Verteilungsschieber 8, welcher den vom Hauptregler 3 stammenden Leitungsdruck P₁ überträgt und über eine erste Abzweigung 16, die eine erste Engstelle 10 aufweist, versorgt wird.

7. Vorrichtung zur Steuerung nach Ansprüchen 4, 5 oder 6, dadurch gekennzeichnet, daß so lange die Bedingungen für das Auskuppeln bei Stillstand nicht erfüllt sind, die Verbindung 20 zwischen dem Eingangsempfänger 9 und dem Sammelbehälter 19 durch den zweiten Verteilungsschieber 12 unterbrochen ist, während die Versorgung des Momentwandlers 5, des Wärmetauschers 6 und des Schmiersystems 7 gleichzeitig gewährleistet wird durch den zweiten Verteilungsschieber 12, welcher den gesamten vom Druckbegrenzer 4 abgegebenen Druck überträgt und von einer zweiten Abzweigung 18, die eine zweite Engstelle 14 aufweist.

8. Vorrichtung zur Steuerung nach einem der Ansprüche 4 bis 7, dadurch gekennzeichnet, daß wenn die Bedingungen für das Auskuppeln bei Stillstand erfüllt sind, der erste und der zweite Verteilungsschieber 8, 11 derart umgeschaltet werden, daß die Versorgung des Eingangsempfängers 9 ausschließlich über die erste Engstelle 10 erfolgt und daß die Versorgung des Wandlers 5, des Wärmetauschers 6 und des Schmiersystems 7 ausschließlich über die zweite Abzweigung 14 erfolgt, wobei die Verbindung des Empfängers mit dem Sammelbehälter zugleich gewährleistet ist.

9. Vorrichtung zur Steuerung nach Ansprüchen 7 oder 8, dadurch gekennzeichnet, daß die Verbindung 20 zwischen Eingangsempfänger 9 und Sammelbehälter 19 eine dritte Engstelle 13 aufweist.

## Claims

1. A method of controlling the feed pressure of the input receiver (9) of an automatic transmission comprising a hydraulic converter (5) which receives the engine torque and transmits it to an epicyclic ratio change train actuated by an assembly of hydraulic receivers under the control of an electronic computer (2), the feed references of the input receiver (9) involving either transmission of the engine torque to the wheels or interruption of said transmission when conditions of transmission disengagement in the stopped condition are satisfied, characterised in that the feed references for the input receiver (9) are applied by virtue of the alternate switching of hydraulic distribution slides (8, 11) having two positions, respectively controlling communication of the input receiver (9) with the tank (19) and the feed for the converter (5), the heat exchanger (6) and the lubrication system (7).

2. A control method according to claim 1 characterised in that the hydraulic receiver (9) is a clutch or a brake provided with linings, the hydraulic feed reference which involves interruption in the transmission of torque being established in such a way as to maintain the linings in the approach position.

3. A control apparatus especially designed for carrying out the method according to claim 1 or claim 2 characterised in that it comprises a hydraulic pump (1) which by way of a main pressure regulator (3) delivers a line pressure P1 directed on the one hand to the input receiver (9) under the control of the first hydraulic distribution slide (8) and on the other hand to the converter (5) under the control of the second hydraulic distributor (11).

4. A control apparatus according to claim 3 characterised in that the second hydraulic distributor (11) also controls the feed for the heat exchanger (6) and the lubrication system (7).

5. A control apparatus according to claim 4 characterised in that the hydraulic distribution slides (8, 11) are actuated by electrically operated all-or-nothing actuating valves (12, 12′) which are placed under the control of the computer (2).

6. A control apparatus according to claim 4 or claim 5 characterised in that, as long as the conditions for transmission disengagement in the stopped condition are not satisfied, the input receiver (9) is fed simultaneously by way of the first distribution slide (8) transmitting the line pressure P₁ coming from the main regulator (3), and by way of a first by-pass (16) having a first restriction (10).

7. A control apparatus according to claim 4, claim 5 or claim 6 characterised in that, as long as the conditions for transmission disengagement in the stopped condition are not satisfied, the communication (20) of the input receiver (9) with the tank (19) is interrupted by the second distribution slide (12) while the feed to the torque converter (5), the heat exchanger (6) and the lubrication system (7) is ensured simultaneously by way of the second distribution slide (12) which transmits the whole of the pressure delivered by the pressure limiter (14), and by a second by-pass (18) having a second restriction (14).

8. A control apparatus according to any one of claims 4 to 7 characterised in that, when the conditions for transmission disengagement in the stopped condition are fulfilled, the first and second distribution slides (8, 11) are switched in such a way that the feed for the input receiver (9) is effected solely by way of the first restriction (10) and that the feed for the converter (5), the heat exchanger (6) and the lubrication system (7) is effected solely by way of the second by-pass (14), the communication of the receiver with the tank also being ensured.

9. A control apparatus according to claim 7 or claim 8 characterised in that the communication (20) of the input receiver (9) with the tank (19) has a third restriction (13).
